# EUROPÄISCHE PATENTSCHRIFT

(11) **EP 1 494 837 B1**
(45) Veröffentlichungstag und Bekanntmachung des Hinweises auf die Patenterteilung: **07.03.2007**
(21) Anmeldenummer: 03702489.0
(22) Anmeldetag: 22.01.2003
(51) Int. Cl.: B25J 9/04, B25J 9/10

(54) **ROBOTERARM MIT INTEGRIERTER ANTRIEBSEINRICHTUNG**
ROBOT ARM HAVING AN INTEGRATED DRIVE DEVICE
BRAS DE ROBOT A DISPOSITIF D'ENTRAINEMENT INTEGRE

(30) Priorität: 12.04.2002 DE 10216435
(43) Veröffentlichungstag der Anmeldung: 12.01.2005
(73) Patentinhaber: Wittenstein AG, 97999 Igersheim (DE)
(72) Erfinder: KONSTAS, Georgios, GR-153 44 Kantza (GR); BÜSCHER, Konstantin, 97999 Igersheim (DE)
(74) Vertreter: Weiss, Peter
(86) Internationale Anmeldenummer: PCT/EP2003/000572
(87) Internationale Veröffentlichungsnummer: WO 2003/086715

(56) Entgegenhaltungen:
- EP-A- 0 295 306
- US-A- 4 518 298
- US-A- 5 017 083
- US-A- 5 271 292
- US-A- 5 314 293
- US-A- 5 640 883
- US-B1- 6 287 406

## Beschreibung

Die vorliegende Erfindung betrifft einen Roboterarm mit integrierter Antriebseinrichtung für einen Roboter, welcher über zumindest einen Arm mit einem Hauptantrieb verfahrbar verbunden ist, wobei der Roboterarm ein Gehäuse aufweist und zum Verschwenken des Gehäuses um eine Achse und zum Antreiben einer Pinole rotativ um eine Achse sowie linear entlang der Achse eine Mehrzahl von Antriebsmotoren vorgesehen sind.

Derartige Antriebseinrichtungen sind in vielfältiger Form und Ausführung auf dem Markt bekannt und erhältlich Nachteilig ist, dass diese apparativ sehr aufwendig ausgebildet sind und diesen meist Antriebsmotoren zum Bewegen dieser Antriebseinrichtungen für Roboter aufsitzen, d. h., über diverse Kupplungselemente miteinander verbunden sein können und in einem separaten Gehäuse ausgeführt sind.

Nachteilig ist ferner, dass derartige Antriebseinrichtungen sehr aufwendig herzustellen und insbesondere für sehr klein ausgebildete Roboter, Miniroboter nicht geeignet sind.

Aus der EP 0 295 306 A1 ist ein Roboterarm offenbart, wobei einzelne Arme miteinander verschwenkbar verbunden sind, und die einzelnen Arme über separate Bremseinrichtungen bremsbar sind. Die einzelnen Arme werden über separate einzelne Elektromotoren ineinander verschwenkt.

Ein ähnlicher Aufbau von Roboterarmen offenbart die. US 5,017,083, bei welcher dem einzelnen Roboterarm ein Elektromotor zum Verschwenken des einzelnen Roboterarmes aufsitzt. Die Elektromotoren sind eigenständig den Armen aufgesetzt und angetrieben.

Ein ähnlicher Roboterarm wird in der US 5,271,292 beschrieben. Dort sitzen auch einzelnen separate Motoren einem Roboterarm auf, um die jeweiligen Arme miteinander bzw. gegeneinander zu verschwenken.

Die US 6,287,406 B1 zeigt ein parallelogrammartiges Entnahmesystem für Glasdächer, wobei entsprechende einzelne Motoren jedem Arm oder Armgliedern zugeordnet sind, die separat antreibbar sind.

Der vorliegenden Erfindung liegt die Aufgabe zugrunde, einen Roboterarm der eingangs genannten Art zu schaffen, welche die genannten Nachteile beseitigt und mit welcher eine Antriebseinheit, insbesondere ein Roboterarm für Roboter realisiert werden kann, welche sehr klein ausgebildet und universell einzusetzen ist. Ferner sollen sehr grosse Winkel, insbesondere Schwenkwinkel sowie eine sehr hohe Leistung und -dichten realisiert werden können.

Zur Lösung dieser Aufgabe führt, dass die Antriebsmotoren im Gehäuse des Roboterarmes integriert eingesetzt und Motorwellen der Antriebsmotoren im Gehäuse des Roboterarmes gelagert sind, wobei die Pinole sowie die Antriebsmotoren in dem gemeinsamen Gehäuse des Roboterarmes eingesetzt sind, und Statoren der Antriebsmotoren in Aufnahmeöffnungen des Gehäuses fest integriert oder wiederlösbar darin eingesetzt sind.

Bei der vorliegenden Erfindung hat es sich als besonders vorteilhaft erwiesen, eine Mehrzahl von Antriebsmotoren fest in ein Gehäuse, insbesondere in den Roboterarm zu integrieren, um einerseits den Roboterarm zu verschwenken und andererseits eine Pinole rotativ anzutreiben und gleichzeitig eine lineare Hubbewegung der Pinole zuzulassen.

Dabei können die Motorelemente bspw. fest in entsprechende Aufnahmeöffnung des Gehäuses eingesetzt bzw. darin gelagert sein. Insbesondere sei auch daran gedacht, dass bspw. die jeweiligen Lagerungen der Motorwelle in Lagerschildern erfolgt, die im Gehäuse aufgenommen werden.

Hierdurch lassen sich kostensparend die Spindelstangen bzw. die Wellen der Antriebsmotoren integriert in das Gehäuse einsetzen. Ebenfalls kann an ein und dieselbe Welle des Motorelementes ein Geberelement, als Rückführungsinstrumente, Absolutwertgeber, Encoder, Resolver od. dgl. angeschlossen werden.

Auch sitzt die entsprechende Lagerung des Motorelementes direkt im Gehäuse bzw. ist in das Gehäuse integriert. Dies gewährleistet, dass die Motorelemente als Bestandteile des Gehäuses selbst gebildet sind, um den Roboterarm zu verschwenken und/oder die Pinole rotativ oder linear anzutreiben.

So können entsprechende Riemen, Zahnriemen, Zahnscheiben od. dgl. vorgesehen sein, um die entsprechenden Antriebsbewegungen durchzuführen. Hierauf sei die Erfindung nicht beschränkt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivisch dargestellte Ansicht auf eine Antriebseinrichtung, insbesondere einen Roboterarm für einen Roboter;
Figur 2 eine schematisch dargestellte Unteransicht auf ein Gehäuse des Roboterarmes;
Figur 3 eine teilweise perspektivisch dargestellte Draufsicht auf den Roboterarm gemäss Figur 1;
Figur 4 eine schematisch dargestellte perspektivische Unteransicht auf einen Teil des Roboterarmes gemäss Figur 1.

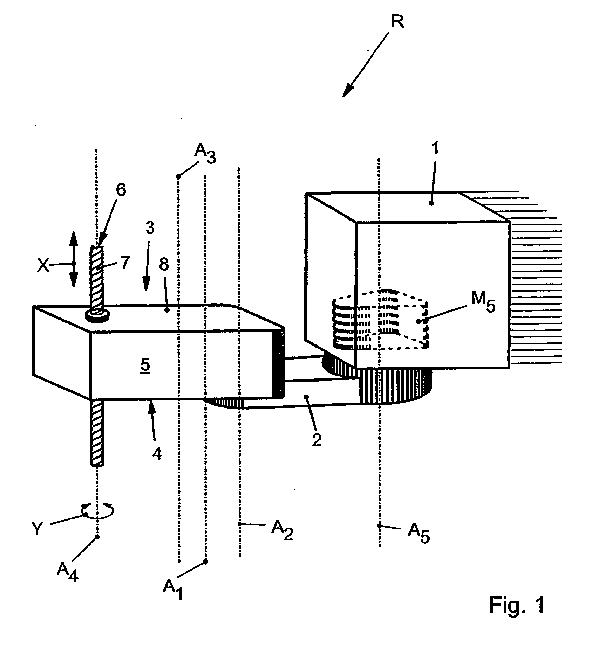

Gemäss Figur 1 weist ein Roboter R einen Hauptantrieb 1 auf, der an einem hier nicht dargestelltem Gestell, Maschinengestell od. dgl. ggf. höhen- und/oder -seitenverschiebbar festgelegt oder gelagert sein kann.

Im Hauptantrieb 1 ist vorzugsweise integriert ein Antriebsmotor M₅, um einen Arm 2 um die Achse A₅ verschwenkbar und ansteuerbar anzutreiben.

Die eigentliche Antriebseinheit 3 sitz verschwenkbar um eine Achse A₂ dem Arm 2 auf.

Die Antriebseinheit 3 ist als Roboterarm 4 ausgebildet und weist ein Gehäuse 5 auf, in welchem einends eine Linearführung, insbesondere Pinole 6, vorzugsweise ausgebildet als Gewindestange, insbesondere Kugelumlaufspindel 7 in dargestellter Doppelpfeilrichtung X bewegbar und in dargestellter Doppelpfeilrichtung Y um die Achse A₄ hin und her antreibbar ist.

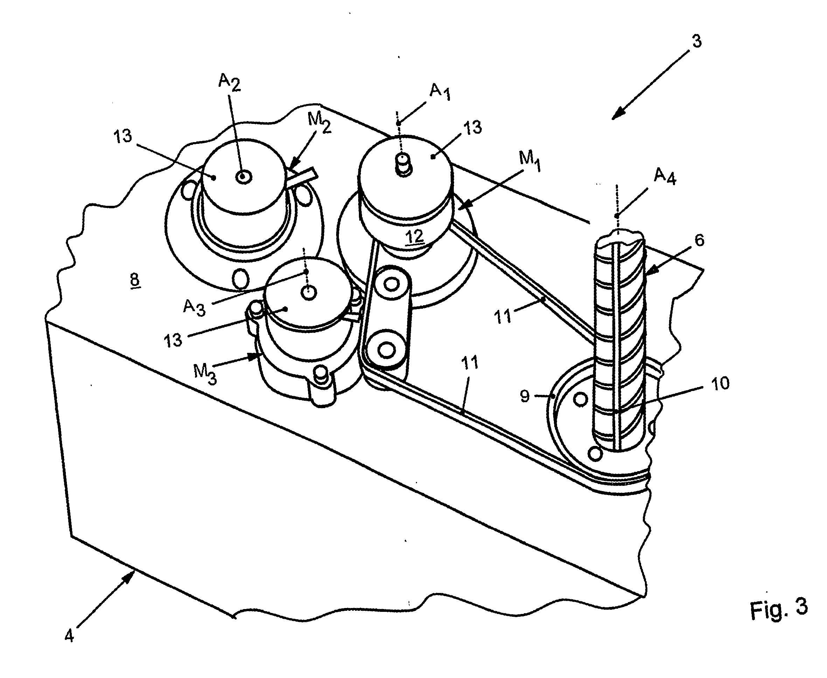

Im Bereich einer Oberseite 8 des Roboterarmes 4 ist, wie es insbesondere auch aus Figur 3 hervorgeht, eine Antriebsscheibe 9 od. dgl. vorgesehen, wobei hier nicht dargestellte Zapfenelemente od. dgl. Mitnehmer in eine Nut 10 der Pinole 6 eingreifen, um diese um die Achse A₄ rotativ anzutreiben. Dabei erfolgt die Antriebsbewegung der Antriebsscheibe 9 über ein Riemenelement 11, welches über den Antriebsmotor M₁ angetrieben wird. Diesem sitzt eine Bremseinrichtung 12 und ein Geberelement 13 auf.

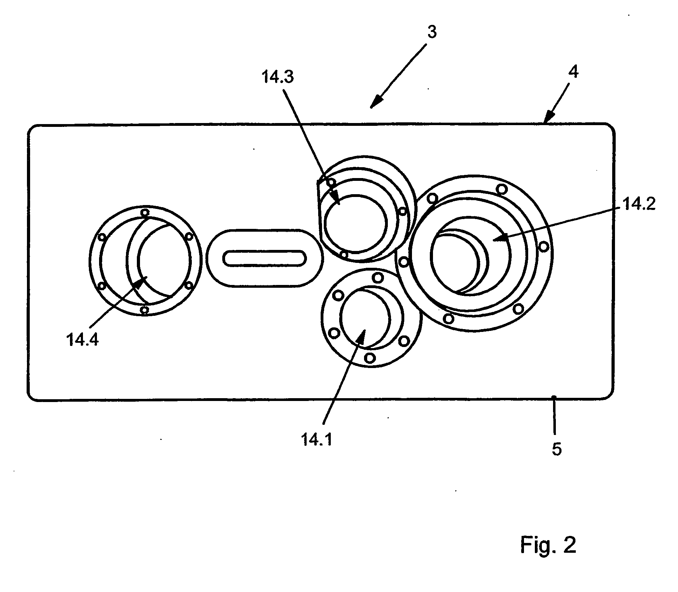

Wichtig ist bei der vorliegenden Erfindung, wie es insbesondere schematisch in Figur 2 dargestellt ist, dass in dem Gehäuse 5 des Roboterarmes 4 Aufnahmeöffnungen 14.1 bis 14.4 vorgesehen sind, wobei die Pinole 6 in der Aufnahmeöffnung 14.4, der Antriebsmotor M₁ in der Aufnahmeöffnung 14.1 und die Antriebsmotoren M₂ und M₃ in den jeweiligen Aufnahmeöffnungen 14.2, 14.3 fest, vorzugsweise wiederlösbar eingesetzt sind. Dabei sind sämtliche für die Bewegung der Pinole 6 und für die Bewegung des Roboterarmes 4 erforderlichen Antriebsmotoren M₁ bis M₃ in das Gehäuse 5 des Roboterarmes 4 integriert eingesetzt. Auch deren Motorwellen sitzen direkt in Lagerungen als Bestandteil des Gehäuses 5.

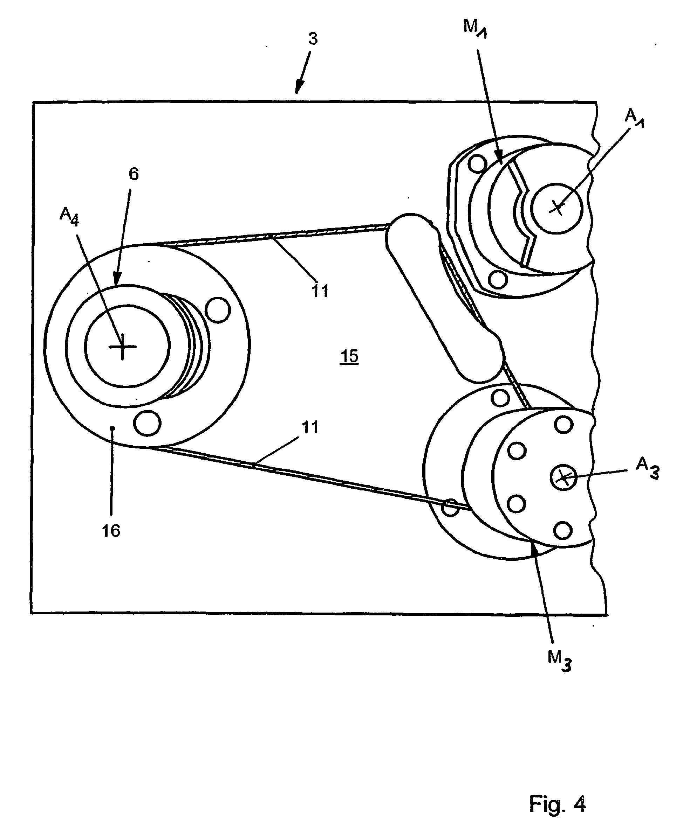

Um die Hubbewegung der Pinole 6 durchzuführen, ist, wie es insbesondere in Figur 4 dargestellt ist, auf einer Unterseite 15 eine Hubscheibe 16 radial verdrehbar über hier nicht dargestellte Lager gelagert, wobei entsprechende hier nicht dargestellte Kugelelemente od. dgl. in die Pinole 6 eingreifen und durch Verdrehen der Hubscheibe 16, die Pinole 6 in dargestellter Doppelpfeil-Richtung X, siehe Figur 1, hin und her bewegbar ist.

Dabei wird die Hubscheibe 16 über das Übertragungselement, insbesondere Riemenelement 11, oder als Kettenelement ausgeführt, mittels des Antriebsmotors M₁ angetrieben.

Der Antriebsmotor M₂, welcher im Gehäuse 5 des Roboterarmes 4 integriert ist, dient zum aktiven Antreiben und Verschwenken des Roboterarmes 4 gegenüber dem Arm 2 um die Achse A₂.

### Positionszahlenliste

| | | | | | |
|---|---|---|---|---|---|
| 1 | Hauptantrieb | 34 | | 67 | |
| 2 | Arm | 35 | | 68 | |
| 3 | Antriebseinheit | 36 | | 69 | |
| 4 | Roboterarm | 37 | | 70 | |
| 5 | Gehäuse | 38 | | 71 | |
| 6 | Pinole | 39 | | 72 | |
| 7 | Kugelumlaufspindel | 40 | | 73 | |
| 8 | Oberseite | 41 | | 74 | |
| 9 | Antriebsscheibe | 42 | | 75 | |
| 10 | Nut | 43 | | 76 | |
| 11 | Riemenelement | 44 | | 77 | |
| 12 | Bremseinrichtung | 45 | | 78 | |
| 13 | Geberelement | 46 | | 79 | |
| 14 | Aufnahmeöffnung | 47 | | | |
| 15 | Unterseite | 48 | | R | Roboter |
| 16 | Hubscheibe | 49 | | | |
| 17 | | 50 | | X | Richtung |
| 18 | | 51 | | Y | Richtung |
| 19 | | 52 | | | |
| 20 | | 53 | | M₁ | Antriebsmotor |
| 21 | | 54 | | M₂ | Antriebsmotor |
| 22 | | 55 | | M₃ | Antriebsmotor |
| 23 | | 56 | | | |
| 24 | | 57 | | M₅ | Antriebsmotor |
| 25 | | 58 | | | |
| 26 | | 59 | | A₁ | Achse |
| 27 | | 60 | | A₂ | Achse |
| 28 | | 61 | | A₃ | Achse |
| 29 | | 62 | | A₄ | Achse |
| 30 | | 63 | | A₅ | Achse |
| 31 | | 64 | | | |
| 32 | | 65 | | | |
| 33 | | 66 | | | |

## Patentansprüche

1. Roboterarm mit integriertes Antriebseinrichtung welcher über zumindest einen Arm (2) mit einem Hauptantrieb (1) verfahrbar verbunden ist, wobei der Roboterarm (4) ein Gehäuse (5) aufweist und zum Verschwenken des Gehäuses (5) um eine erste Achse (A₂) und zum Antreiben einer Pinole (6) rotativ um eine zweite Achse (A₄) sowie linear entlang der zweiten Achse (A₄) eine Mehrzahl von Antriebsmotoren (M₁ bis M₃) vorgesehen sind,
**dadurch gekennzeichnet,**
**dass** drei Antriebsmotoren (M₁ bis M₃) im Gehäuse (5) des Roboterarmes (4) integriert eingesetzt und Motorwellen der Antriebsmotoren (M₁ bis M₃) im Gehäuse (5) des Roboterarmes (4) gelagert sind, wobei die Pinole (6) sowie die Antriebsmotoren (M₁ bis M₃) in dem gemeinsamen Gehäuse des Roboterarmes (4) eingesetzt sind, und Statoren der Antriebsmotoren (M₁ bis M₃) in Aufnahmeöffnungen (14.1) bis (14.3) des Gehäuses (5) fest integriert oder wiederlösbar darin eingesetzt sind.

2. Roboterarm mit integriertes Antriebseinrichtung nach Anspruch 1, **dadurch gekennzeichnet, dass** die Antriebsmotoren (M₁ bis M₃) in das Gehäuse (5) integriert eingesetzt sind.

3. Roboterarm mit integriertes Antriebseinrichtung nach Anspruch 1 oder 2, **dadurch gekennzeichnet, dass** die Antriebsmotoren (M₁ bis M₃) in Aufnahmeöffnungen (14.1 bis 14.3) des Gehäuses (5) integriert werden und wahlweise als geschrumpfte oder lösbare Verbindung ausgeführt sind.

4. Roboterarm mit integriertes Antriebseinrichtung nach wenigstens einem der Ansprüche 1 bis 3, **dadurch gekennzeichnet, dass** jedem Antriebsmotor (M₁ bis M₃) ein Geberelement (13), insbesondere Resolver, Encoder, oder Absolutwertgeber zugeordnet ist.

5. Roboterarm mit integriertes Antriebseinrichtung nach wenigstens einem der Ansprüche 1 bis 4, **dadurch gekennzeichnet, dass** dem ersten Antriebsmotor (M₁) zum Antreiben der Pinole (6) rotativ um die zweite Achse (A₄) eine elektromechanisch betätigbare. Bremseinrichtung (12) zugeordnet ist.

6. Roboterarm mit integriertes Antriebseinrichtung nach wenigstens einem der Ansprüche 1 bis 5, **dadurch gekennzeichnet, dass** das Gehäuse (5), insbesondere der Roboterarm (4), um die erste Achse (A₂) verschwenkbar mit dem Arm (2) in Verbindung steht, wobei der zweite Antriebsmotor (M₂) eine Verschwenkbewegung des Roboterarmes (4) gegenüber dem Arm (2) steuert.

7. Roboterarm mit integriertes Antriebseinrichtung nach wenigstens. einem der Ansprüche 1 bis 6, **dadurch gekennzeichnet, dass** nahe im Bereich des zweiten Antriebsmotores (M₂) jeweils die beiden weiteren Antriebsmotoren (M₁ und M₃) angeordnet sind.

8. Roboterarm mit integriertes Antriebseinrichtung nach wenigstens einem der Ansprüche 1 bis 7, **dadurch gekennzeichnet, dass** über den ersten Antriebsmotor (M₁) mittels eines Übertragungselementes, insbesondere Riemenelementes (11) eine Antriebsscheibe (9) einer Linearführung, insbesondere Pinole (6) antreibbar ist.

9. Roboterarm mit integriertes Antriebseinrichtung nach wenigstens einem der Ansprüche 1 bis 8, **dadurch gekennzeichnet, dass** die Liniearführung, insbesondere die Pinole (6) als Gewindespindel, insbesondere als Kugelumlaufspindel (7) mit einer in Längsrichtung verlaufenden Nut (10) ausgebildet ist.

10. Roboterarm mit integriertes Antriebseinrichtung nach Anspruch 8 oder 9, **dadurch gekennzeichnet, dass** die Antriebsscheibe (9) mit der Nut (10) in Eingriff steht und durch rotatives Antreiben über den ersten Antriebsmotor (M₁) eine Drehbewegung der Pinole (6) um die zweite Achse (A₄) ermöglicht.

11. Roboterarm mit integriertes Antriebseinrichtung nach wenigstens einem der Ansprüche 1 bis 10 **dadurch gekennzeichnet, dass** zur Durchführung einer Hubbewegung eine Hubscheibe (16) über ein Übertragungselement, insbesondere Riemenelement (11) mit dem dritten Antriebsmotor (M₃) in Eingriff steht, wobei durch Verdrehen der Hubscheibe (16) zumindest ein Kugelelement oder Zapfenelement in spindelartige Ausnehmungen der Pinole (6) zur Durchführung einer Hubbewegung eingreifen.

12. Roboterarm mit integriertes Antriebseinrichtung nach wenigstens einem der Ansprüche 1 bis 11, **dadurch gekennzeichnet, dass** der Hauptantrieb (1) einen weiteren Antriebsmotor (M₅) aufweist, der um eine Achse (A₅) den Arm (2) antreibt.

## Claims

1. Robot arm with integrated drive device, which is movably connected by at least one arm (2) to a main drive (1), wherein the robot arm (4) comprises a housing (5) and a plurality of drive motors (M₁ to M₃) are provided for pivoting the housing about a first axis (A₂) and for driving a quill (6) rotationally about a second axis (A₄) as well as linearly along the second axis (A₄),
**characterized in**
**that** three drive motors (M₁ to M₃) are installed so as to be integrated in the housing (5) of the robot arm (4) and motor shafts of the drive motors (M₁ to M₃) are mounted in the housing (5) of the robot arm (4), wherein the quill (6) as well as the drive motors (M₁ to M₃) are installed in the common housing of the robot arm (4), and stators of the drive motors (M₁ to M₃) are permanently integrated or removably inserted into location openings (14.1) to (14.3) of the housing (5).

2. Robot arm with integrated drive device according to claim 1, **characterized in that** the drive motors (M₁ to M₃) are installed so as to be integrated into the housing (5).

3. Robot arm with integrated drive device according to claim 1 or 2, **characterized in that** the drive motors (M₁ to M₃) are integrated into location openings (14.1 to 14.3) of the housing (5) and are selectively implemented as a contraction connection or releasable connection.

4. Robot arm with integrated drive device according to at least one of claims 1 to 3, **characterized in that** a sensor element (13), in particular a resolver, encoder, or absolute value encoder is associated with each drive motor (M₁ to M₃) .

5. Robot arm with integrated drive device according to at least one of claims 1 to 4, **characterized in that** an electromechanically actuable braking device (12) is associated with the first drive motor (M₁) for setting the quill (6) in rotation about the second axis (A₄).

6. Robot arm with integrated drive device according to at least one of claims 1 to 5, **characterized in that** the housing (5), in particular the robot arm (4), is connected pivotably about the first axis (A₂) to the arm (2), wherein the second drive motor (M₂) controls a swivelling motion of the robot arm (4) relative to the arm (2).

7. Robot arm with integrated drive device according to at least one of claims 1 to 6, **characterized in that** in the vicinity of the second drive motor (M₂) in each case the two further drive motors (M₁ and M₃) are disposed.

8. Robot arm with integrated drive device according to at least one of claims 1 to 7, **characterized in that** a driving pulley (9) of a linear guide, in particular quill (6) is driveable by means of the first drive motor (M₁) via a transmission element, in particular belt element (11) .

9. Robot arm with integrated drive device according to at least one of claims 1 to 8, **characterized in that** the linear guide, in particular the quill (6) is designed as a threaded spindle, in particular as a recirculating ball screw (7) having a groove (10) extending in longitudinal direction.

10. Robot arm with integrated drive device according to claim 8 or 9, **characterized in that** the driving pulley (9) is in engagement with the groove (10) and by being set in rotation by means of the first drive motor (M₁) enables a rotational movement of the quill (6) about the second axis (A₄).

11. Robot arm with integrated drive device according to at least one of claims 1 to 10, **characterized in that** for implementation of a reciprocating motion an eccentric disc (16) is in engagement via a transmission element, in particular belt element (11) with the third drive motor (M₃), wherein by means of rotation of the eccentric disc (16) at least one ball element or pin element engage into spindle-like recesses of the quill (6) for implementation of a reciprocating motion.

12. Robot arm with integrated drive device according to at least one of claims 1 to 11, **characterized in that** the main drive (1) comprises a further drive motor (M₅), which drives the arm (2) about an axis (A₅).

## Revendications

1. Bras de robot à dispositif d'entraînement intégré qui est relié de manière déplaçable, par l'intermédiaire d'un bras (2) à un entraînement principal (1), le bras de robot (4) présentant un boîtier (5) et pour le pivotement du boîtier (5) autour d'un premier axe (A₂) et pour l'entraînement d'un fourreau (6) en rotation autour d'un deuxième axe (A₄) ainsi que linéairement le long du deuxième axe (A₄) étant prévus une pluralité de moteurs d'entraînement (M₁ à M₃),
**caractérisé par le fait**
**que** trois moteurs d'entraînement (M₁ à M₃) sont placés intégrés dans le boîtier (5) du bras de robot (4) et que les arbres des moteurs d'entraînement (M₁ à M₃) sont montés dans le boîtier (5) du bras de robot (4), le fourreau (6) ainsi que les moteurs d'entraînement (M₁ à M₃) étant placés dans le boîtier commun du bras de robot (4), et les stators des moteurs d'entraînement (M₁ à M₃) étant intégrés de manière fixe dans des ouvertures de réception (14.1) à (14.3) du boîtier (5) ou y placés de manière amovible.

2. Bras de robot à dispositif d'entraînement intégré selon la revendication 1, **caractérisé par le fait que** les moteurs d'entraînement (M₁ à M₃) sont placés intégrés dans le boîtier (5).

3. Bras de robot à dispositif d'entraînement intégré selon la revendication 1 ou 2, **caractérisé par le fait que** les moteurs d'entraînement (M₁ à M₃) sont intégrés dans des ouvertures de réception (14.1 à 14.3) du boîtier (5) et sont réalisés au choix sous forme de connexion rétrécie ou amovible.

4. Bras de robot à dispositif d'entraînement intégré selon l'une des revendications 1 à 3, **caractérisé par le fait qu'**à chaque moteur d'entraînement (M₁ à M₃) est associé un élément capteur (13), en particulier une machine resolver, un codeur ou un capteur de valeur absolue.

5. Bras de robot à dispositif d'entraînement intégré selon l'une des revendications 1 à 4, **caractérisé par le fait qu'**au premier moteur d'entraînement (M₁) destiné à entraîner le fourreau (6) autour du deuxième axe (A₄) est associé un dispositif de frein (12) à actionnement électromécanique.

6. Bras de robot à dispositif d'entraînement intégré selon l'une des revendications 1 à 5, **caractérisé par le fait que** le boîtier (5), en particulier le bras de robot (4), est en communication avec le bras (2) de manière pivotable autour du premier axe (A₂), le deuxième moteur d'entraînement (M₂) commandant un mouvement de pivotement du bras de robot (4) par rapport au bras (2).

7. Bras de robot à dispositif d'entraînement intégré selon l'une des revendications 1 à 6, **caractérisé par le fait que** près de l'endroit du deuxième moteur d'entraînement (M₂) sont disposés respectivement les deux autres moteurs d'entraînement (M₁ et M₃).

8. Bras de robot à dispositif d'entraînement intégré selon l'une des revendications 1 à 7, **caractérisé par le fait que** par l'intermédiaire du premier moteur d'entraînement (M₁) peut être entraîné, au moyen d'un élément de transmission, en particulier un élément à courroie (11), un disque d'entraînement (9) d'un dispositif de guidage linéaire, en particulier un fourreau (6).

9. Bras de robot à dispositif d'entraînement intégré selon l'une des revendications 1 à 8, **caractérisé par le fait que** le dispositif de guidage linéaire, en particulier le fourreau (6), est réalisé sous forme de vis filetée, en particulier de vis à billes (7) à rainure (10) s'étendant dans la direction longitudinale.

10. Bras de robot à dispositif d'entraînement intégré selon la revendication 8 ou 9, **caractérisé par le fait que** le disque d'entraînement (9) est en prise avec la rainure (10) et permet, par un entraînement en rotation par l'intermédiaire du premier moteur d'entraînement (M₁), un mouvement de rotation du fourreau (6) autour du deuxième axe (A₄).

11. Bras de robot à dispositif d'entraînement intégré selon l'une des revendications 1 à 10, **caractérisé par le fait que** pour effectuer un mouvement de levage, un disque de levage (16) est en prise, par l'intermédiaire d'un élément de transmission, en particulier un élément à courroie (11), avec le troisième moteur d'entraînement (M₃), par la rotation du disque de levage (16) s'engageant au moins un élément à bille ou un élément à tourillon dans des évidements en forme de broche du fourreau (6) pour la réalisation d'un mouvement de levage.

12. Bras de robot à dispositif d'entraînement intégré selon l'une des revendications 1 à 11, **caractérisé par le fait que** l'entraînement principal (1) présente un autre moteur d'entraînement (M₅) qui entraîne le bras (2) autour d'un axe (A₅).
